# EUROPÄISCHE PATENTSCHRIFT

(11) **EP 0 692 375 B1**
(45) Veröffentlichungstag und Bekanntmachung des Hinweises auf die Patenterteilung: **19.04.2000**
(21) Anmeldenummer: 95110374.6
(22) Anmeldetag: 04.07.1995
(51) Int. Cl.: B32B 31/00

(54) **Einrichtung zur Bearbeitung von Material**
Device for treating material
Dispositif pour traiter un matériau

(30) Priorität: 12.07.1994 DE 4424429
(43) Veröffentlichungstag der Anmeldung: 17.01.1996
(73) Patentinhaber: bielomatik Leuze GmbH + Co, D-72639 Neuffen (DE)
(72) Erfinder: Bohn, Martin, D-72762 Reutlingen (DE); Scheller, Wolfgang, D-97241 Oberpleichfeld (DE); Hörz , Klaus, D-72639 Neuffen (DE)
(74) Vertreter: Patentanwälte Ruff, Beier, Schöndorf und Mütschele

(56) Entgegenhaltungen:
- EP-A- 0 219 114
- EP-A- 0 355 292
- EP-A- 0 358 382
- EP-A- 0 496 582
- EP-A- 0 554 911
- DE-A- 2 853 033
- DE-C- 969 370
- US-A- 2 291 841
- US-A- 3 311 032
- US-A- 3 835 756
- US-A- 3 946 629
- US-A- 4 003 780
- US-A- 4 061 527
- US-A- 4 285 747
- US-A- 4 642 150
- US-A- 4 838 982
- US-A- 5 102 485
- US-A- 5 380 381
- US-A- 5 413 651
- US-A- 5 415 716

## Beschreibung

Die Erfindung betrifft eine Einrichtung nach dem Oberbegriff des Patentanspruchs 1. Sie dient zur Bearbeitung von Material, wie Lagen-Material, insbesondere zum Aufbringen eines oder mehrerer Lagenteile auf einen oder mehrere Trägerteile aus flächigem Material, wie solchem aus papierähnlichem Werkstoff. Der jeweilige Lagen- bzw. Trägerteil kann durch Gegenstände bzw. eine kontinuierliche Materialbahn oder einzelne Abschnitte, wie Blattlagen, gebildet und jeweils in Laufrichtung oder quer dazu größer als der andere Teil sein. Die beiden Teile werden zweckmäßig haftend bzw. scherfest miteinander verbunden, z.B. durch eine Klebstoffschicht, wobei in der Regel der Trägerteil allseits über den Lagenteil vorsteht bzw. mit diesem kantenbündig abschließt.

Lagenteile können z.B. Etiketten oder andere Marken bzw. Blatt-Teile sein. Sie können endlos von einem Rollenspeicher zugeführt bzw. als vorgestanzte Etiketten auf den Trägerteil übertragen werden. Sowohl das die Etiketten umgebende Abfallgitter als auch eine eventuell die Lagenteile zunächst tragende Tragbahn, also diejenigen Teile, welche nicht auf den Trägerteil übertragen werden, werden vor diesem durch Umlenkung entfernt und entsorgt.

Ist der Trägerteil eine Endlosbahn, so wird diese nach dem Aufbringen der Lagenteile durch Längs- und/oder Querschnitte in einzelne Blattlagen gleichen oder unterschiedlichen Formates getrennt, wobei die Schnittlinien bereits beim Aufbringen der Lagenteile vorgegeben sind und daher Formatkanten bestimmen. Gegenüber diesen werden ein oder mehrere Lagenteile auf jedes Formatfeld positionsgerecht hintereinander und/oder nebeneinander aufgebracht. Hierbei sollen nicht nur in Laufrichtung aufeinanderfolgende, gleiche Formatfelder mit in Laufrichtung gleich großen, hintereinander liegenden Lagenteilen gleicher Größe in gleicher oder unterschiedlicher Positionierung versehen werden können. Es besteht auch das Bedürfnis, aufeinanderfolgende Formatfelder mit in Laufrichtung unterschiedlich großen Lagenteilen, mit in Laufrichtung unterschiedlich positionierten Lagenteilen und/oder jeweils mit mehreren Lagenteilen zu versehen, die von Formatfeld zu Formatfeld unterschiedlich groß bzw. positioniert sind, wobei es auch wünschenswert ist, einzelne Formatfelder von Lagenteilen frei lassen zu können.

Durch die EP-A-0 496 582 ist eine Einrichtung zur Bearbeitung von Material, wie Lagen-Material, insbesondere zum Aufbringen mindestens eines Lagenteiles auf wenigstens einen Trägerteil mit einem Einrichtungsgestell und Arbeitsläufern bekannt geworden, die einen Vorzugläufer, einen Positionierläufer und einen Übergabeläufer für den jeweiligen Lagenteil umfassen, wobei ein Vorzugantrieb, ein Positionierantrieb bzw. ein Übergabeantrieb im Arbeitsbetrieb der Einrichtung mit Relativgeschwindigkeiten antreibbar sind. Diese Relativgeschwindigkeiten bzw. Übersetzungsverhältnisse sind im Arbeitsbetrieb unveränderbar. Unterschiedliche Positionierungen des Lagenteiles müssen daher mit einer Wippe erzeugt werden, welche verhältnismäßig große Massen reversierend zu bewegen hat.

Der Erfindung liegt die Aufgabe zugrunde, eine Einrichtung zu schaffen, bei welcher Nachteile bekannter Ausbildungen vermieden sind und insbesondere das Aufbringen von Lagenteilen nach einem bis allen der genannten Kriterien möglich ist, wobei bevorzugt sehr geringe Umrüstarbeiten zur Umstellung erforderlich sein sollen.

Erfindungsgemäß sind die Merkmale nach Patentanspruch 1 vorgesehen. Die Einrichtung weist wahlweise einen Vorschub für den jeweiligen Lagenteil, eine Übergabevorrichtung zur Übergabe des Lagenteiles an den Trägerteil bzw. dazwischen eine Positioniervorrichtung zur Übernahme des Lagenteiles vom Vorschub oder zur positionsgerechten Abgabe des Lagenteiles an die Übergabevorrichtung auf. Der Vorschub, die Positioniervorrichtung und/oder die Übergabevorrichtung können im Arbeitsbetrieb der Einrichtung mit hinsichtlich der Bewegungsgeschwindigkeit des Lagenteiles stufenlos veränderbarem Übersetzungsverhältnis antreibbar sein. Durch dynamische Veränderung des Übersetzungsverhältnisses zwischen Vorschub und Positioniereinrichtung kann letztere abwechselnd oder in anderer Weise unterschiedlich lange Lagenteile übernehmen, nämlich für jedes Formatfeld nur einen einzigen oder mehrere hintereinanderliegende. Durch dynamische Veränderung des Übersetzungsverhältnisses zwischen der Positionier- und der Übergabeeinrichtung kann letztere den oder die Lagenteile mit sich von Formatfeld zu Formatfeld ändernden Abständen voneinander bzw. mit unterschiedlichen Positionierungen an den Trägerteil abgeben sowie gegenüber diesem haftend festlegen.

Zur Bestimmung der Positionierung dient zweckmäßig jeweils eine quer zur Laufrichtung liegende Außenkante des Lagenteiles, insbesondere dessen hintere Außenkante. Aufgrund dieser Arbeitsweise ist es auch möglich, in Laufrichtung aneinander schließende Formatfelder mit unterschiedlichen Anzahlen von hintereinanderliegenden Lagenteilen zu versehen bzw. zwischen benachbarten Formatfeldern liegende Formatfelder vom Anbringen eines Lagenteiles vollständig auszunehmen. Die in Laufrichtung zu messende Länge der Lagenteile kann zwischen etwa 10 und 330 mm oder mehr stufenlos variiert werden, z.B. durch Abtrennen von einer Lagenbahn mit einer Querschneidvorrichtung, welche dann so, wie anhand der Positioniervorrichtung beschrieben, antreibbar bzw. durch diese gebildet ist.

Der Vorschub, die Trennvorrichtung, die Positioniervorrichtung und/oder die Übergabevorrichtung kann jeweils durch einen gesonderten Motor angetrieben werden, welcher rechnergesteuert während des Betriebes mit unterschiedlichen Drehgeschwindigkeiten antreibt. Hierfür ist insbesondere ein vektorgeregelter Asynchronmotor geeignet, welcher einen Läufer der jeweiligen Vorrichtung ohne Zwischengetriebe unmittelbar antreibt, so daß der Läufer je vollem Umlauf mit den unterschiedlichen Geschwindigkeiten bewegt werden kann.

Die Übergabevorrichtung bzw. deren Übergabeläufer wird zweckmäßig mit einer Steuer- und Antriebseinheit angetrieben, die wie die genannten Motoren einen dynamisch drehzahl- bzw. drehstellungsregelbaren Antrieb ermöglicht. Sie kann z.B. eine Getriebeanordnung sein, welche über eine Königs- bzw. Hauptwelle mit im wesentlichen konstanter Drehzahl angetrieben wird, deren Abtrieb für die Übergabevorrichtung jedoch in der genannten Weise steuerbar ist. Ein Übergabeläufer der Übergabevorrichtung läuft zweckmäßig synchron mit dem bzw. schlupffrei zum Trägerteil, wobei jedoch von dieser Laufgeschwindigkeit der Vorzug und die Positionierung jederzeit unabhängig steuerbar sind.

Der genannte Antrieb des Läufers, insbesondere des Übergabeläufers, erfolgt zweckmäßig entsprechend der europäischen Patentanmeldung 95 103 316.6 durch die an einem Grundgestell angeordnete Steuer- und Antriebseinheit. Auch ist die Einrichtung nach der dort beschriebenen Arbeitseinheit ausgebildet bzw. angeordnet, weswegen zur Einbeziehung in die vorliegende Erfindung vollinhaltlich auf diese ältere Anmeldung Bezug genommen wird.

Die Anzahl der je Formatfeld hintereinander liegenden Lagenteile ist durch das freie veränderbare Übersetzungsverhältnis zwischen Messer- und Tragteil-Geschwindigkeit wählbar. Die Positionierung des jeweiligen Lagenteiles wird über die Messerposition vor dem Schnitt vorgewählt. Die Lagenbahn wird durch den Vorschub frei zwischen Messerläufer und Gegen- bzw. Übergabeläufer durchgefördert und legt sich auf letzterem über Saugbohrungen. Solange die Abtrennung des Lagenteiles noch nicht erfolgt ist, kann der Saug- bzw. Übergabezylinder gegenüber der Lagenbahn frei gleiten, so daß sich vor der Quertrennung ein Schlupf ohne Materialbeschädigung ergibt, nach der Quertrennung der Lagenteil jedoch lagestabil am Saugzylinder gehalten ist, also dann kein Schlupf mehr gegeben ist.

Ergibt sich bei der Übernahme des Lagenteiles durch den Übergabeläufer bzw. nach der Quertrennung noch ein geringer Schlupf, so kann dieser dadurch kompensiert werden, daß die permanente Drehstellungs-Überlagerung durch das, einen Drehstellungs-Registermotor aufweisende, Überlagerungsgetriebe entsprechend eingestellt wird.

Um die Beschleunigung bzw. Verzögerung durch den jeweiligen Antrieb trägheitsarm zu ermöglichen, sind die angetriebenen bzw. bewegten Teile der entsprechenden Vorrichtungen, insbesondere des Vorzuges bzw. der Positioniervorrichtung möglichst massearm ausgebildet. Dies kann durch Werkstoffe erzielt werden, welche gegenüber Stahl ein wesentlich geringeres spezifisches Gewicht bzw. mindestens so hohe Biegefestigkeiten aufweisen und/oder dadurch, daß der Kern des jeweiligen bewegten Teiles als Hohlkammerprofil mit mehreren, insbesondere voneinander getrennten Hohlräumen versehen ist. Als Werkstoff eignet sich insbesondere glasfaserverstärkter Kunststoff und als Hohlräume eignen sich insbesondere Längskanäle bzw. über den Querschnitt verteilte Längskanäle, deren Anordnung und Verteilung auch zur dynamischen Auswuchtung des Arbeitsläufers dienen können.

Durch eine Druckmarkenregelung, nämlich eine Steuerung über Marken an dem Lagenteil bzw. dem Trägerteil, können diese beiden Teile sehr positionsgenau zusammengebracht werden. Zur Erfassung der Marken sind entsprechende Sensoren vorgesehen, deren Signale zur Steuerung der genannten Geschwindigkeiten verwendet werden. Durch das erfindungsgemäße Antriebskonzept mit vektorgeregeltem Asynchronmotor, dessen Drehstellung jeweils erfaßt und zur Steuerung herangezogen wird, ist eine dynamische Steuerung bzw. Regelung jeder der genannten Vorrichtungen unabhängig von den anderen möglich. Dadurch kann die Länge des jeweiligen Lagenteiles, deren Anzahl und Positionierung je Formatfeld innerhalb gegebener Grenzen beliebig gewählt werden. Auch können nur ausgewählte Formatfelder mit einem Lagenteil versehen werden. Damit die Lagenbahn Beschleunigungen durch den Vorschub nur eine möglichst geringe Trägheit entgegensetzt, ist sie unmittelbar vor dem Einlauf in den Vorschub bereits abgerollt und freihängend geführt, z.B. über ein massearmes System von Tänzerrollen.

Der die genannten Vorrichtungen tragende Teil der Einrichtung ist zweckmäßig als betriebsbereit vormontierte Baugruppe ausgebildet, welche quer zur Materiallaufrichtung bzw. etwa parallel zur Materialebene auf ein Grundgestell aufgeschoben bzw. von diesem abgenommen werden kann, gegenüber dem Grundgestell in der genannten Querrichtung sowie um eine etwa vertikale Achse zu justieren und gegenüber dem Grundgestell durch Verspannung festzusetzen ist. Die Baueinheit weist hierbei ein kupplungsartiges Verbindungsglied zur zerstörungsfrei leicht lösbaren Verbindung mit dem Grundgestell auf, welches das gesamte Gewicht der Arbeitseinheit trägt.

Elektrische Steuerleitungen für die Antriebe, Fluid-Steuerleitungen für Fluidantriebe und die Getriebeverbindung zum Überlagerungsgetriebe können ebenfalls zerstörungsfrei leicht gelöst werden. Die Arbeitseinheit ist zweckmäßig Bestandteil einer Fertigungsstraße mit weiteren, auf dem Grundgestell angeordneten Arbeitseinheiten, welche nacheinander von der Trägerbahn durchlaufen werden. Für diese Arbeitseinheiten ist eine gemeinsame, rechnergestützte Steuereinrichtung vorgesehen, die nach Art eines Kollisionsnetzwerkes arbeitet und eine Haupteinheit, eine Leiteinheit und für die jeweilige Arbeitseinheit eine manuell zu bedienende Steuerung aufweist. Jede dieser drei Einheiten enthält eine speicherprogrammierbare Steuerung, wobei die Einheiten in Reihe bzw. im Kreislauf nach Art eines Steuerungsbus' zusammengeschaltet sind. Die Arbeitseinheiten können gegenseitig ohne weiteres ausgetauscht werden, da jede speicherprogrammierbare Steuerung das gleiche Programm enthält. Alle im Datenbus enthaltenen Informationen aller Steuerungen stehen laufend allen Steuerungen zur Verfügung, die ihrerseits alle erfaßten Zustandsänderungen, z.B. die Drehstellungen der genannten Antriebe, in den Datenbus einspeisen.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte Ausführungen darstellen können. Ausführungsbeispiele der Erfindung sind in den Zeichnungen dargestellt und werden im Folgenden näher erläutert. In den Zeichnungen zeigen:
- Fig. 1: eine erfindungsgemäße Einrichtung im Querschnitt parallel zur Material-Laufrichtung,

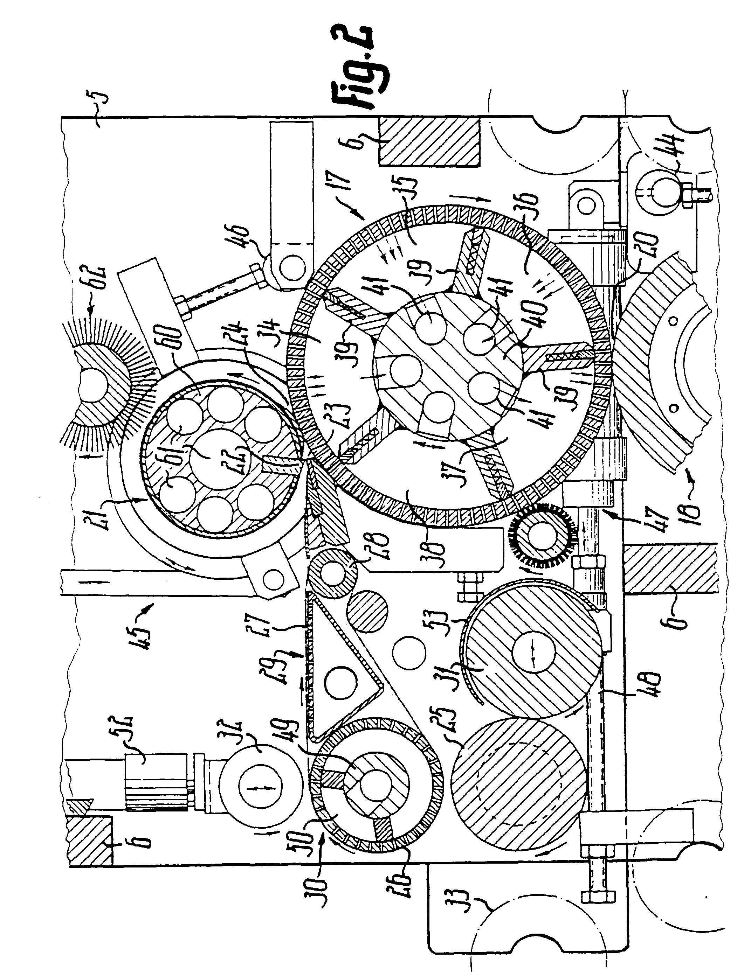

- Fig. 2: einen Ausschnitt der Fig. 1 in vergrößerter Darstellung,

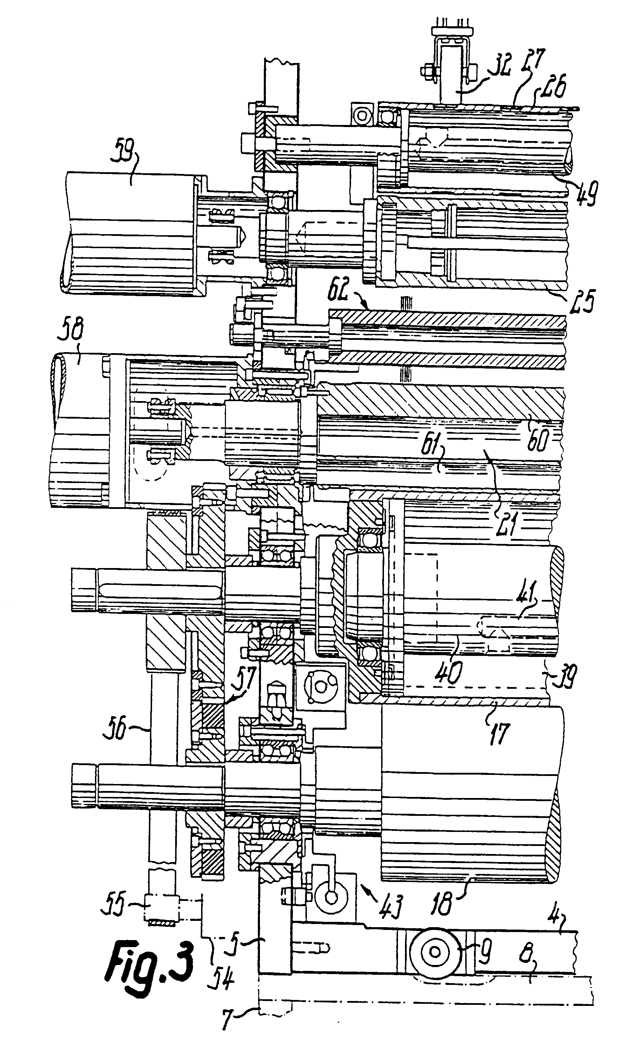

- Fig. 3: die Arbeitsläufer der Einrichtung in teilweise geschnittener Radialansicht und abgewickelter Darstellung und
- Fig. 4: einen Ausschnitt einer weiteren Ausführungsform.

Die Einrichtung 1 ist im wesentlichen aus einer oberen Arbeitseinheit 2 und einem unteren Maschinenteil bzw. Grundgestell 3 für mehrere aufeinanderfolgende Arbeitseinheiten zusammengesetzt. Im untersten Bereich weist die Arbeitseinheit 2 eine etwa an ihren Grundriß anschließende, rahmenförmige Basis 4 mit einer Rahmenöffnung auf, deren Breite mindestens so groß wie die zu verarbeitende Materialbreite ist. An den voneinander abgekehrten Rahmenkanten der Basis 4 sind zwei beiderseits außerhalb der Arbeitsbreite liegende, plattenförmige Seitenwangen 5 befestigt, die außer über die Basis 4 noch über weitere Traversen 6 formsteif miteinander verbunden sind. Das Gestell 3 weist zwei entsprechende, etwa in den Ebenen der Seitenwangen 5 beiderseits der Arbeitsbreite liegende, plattenförmige Seitenwangen 7 und diese an der Oberseite als Traversen verbindende, stab- bzw. schienenförmige Träger 8 auf, auf welcher die Einheit 2 mit den Querzargen der Basis 4 abgestützt und durch Verspannen gegen die schienenartigen Laufflächen der Träger 8 festgesetzt werden kann. Über die Unterseite der Basis 4 stehen rollenförmige Läufer 9 vor, mit welchen die Einheit 2 sowohl auf den Schienen 8 als auch auf jeder beliebigen Abstellfläche geradlinig verfahren werden kann und die bei verspannter Einheit 2 in Vertiefungen der Schienenlaufflächen unabgestützt liegen.

Der Trägerteil 10 bzw. die zu verarbeitende Trägerbahn aus Papier oder dgl. wird etwa horizontal in Laufrichtung 12 an einer Seite zwischen die Seitenwangen 5 eingeführt und an der anderen Seite wieder herausgeführt, wobei sie dazwischen annähernd unter Zug gespannt geradlinig bzw. in einer horizontalen Ebene ohne wesentliche Umlenkung verlaufen kann. Die zur Bildung von Spende- bzw. Lagenteilen 11' vorgesehene Lagenbahn 11 aus Papier oder dgl. wird annähernd in entgegengesetzter Laufrichtung 13 schräg nach unten gegen die Trägerbahn 10 von der Auslaufseite zugeführt, läuft unmittelbar oberhalb der bereits mit Lagenteilen 11' versehenen Trägerbahn 10 und parallel zu dieser ohne dazwischen liegende Trennmittel zwischen die Seitenwangen 5, wird dann etwa S-förmig entgegengesetzt sowie von dort nach oben und wieder entgegen Laufrichtung 12 umgelenkt, wonach die Lagenteile über mehr als 180° und weniger als 225° nach unten und so in Laufrichtung 12 umgelenkt werden, daß sie mit gleicher Geschwindigkeit wie die Trägerbahn 10 abwälzend an diese übergeben werden und dann unter dem zugeführten Abschnitt der Lagenbahn 11 in Laufrichtung 12 die Einheit 2 verlassen.

Die Übergabe der Lagenteile 11' an die Trägerbahn 10 erfolgt durch eine Übergabevorrichtung 14, welche ihrerseits die Lagenteile 11' oberhalb der Trägerbahn 10 von einer Positionier- bzw. Quertrenn-Vorrichtung 15 übernimmt. Letzterer wird die Lagenbahn 11 durch Vorzugmittel 16 mit den genannten Umlenkungen zugeführt. Sämtliche bewegten Teile der Mittel 14 bis 16 sind unmittelbar oder mittelbar an den Seitenwangen 5 gelagert, wobei sich die die Bahnen führenden Bereiche dieser Mittel mindestens über die gegenüber dem lichten Abstand zwischen den Seitenwangen 5 geringfügig kleinere Arbeitsbreite bzw. Bahnbreite der Trägerbahn 10 erstrecken.

Die Vorrichtung 14 weist einen im Bereich der tiefsten Stelle seines durchgehend zylindrischen Außenumfanges tangierend an die Laufbahn der Trägerbahn 10 anschließenden Übergabeläufer 17 und einen mit der höchsten Stelle seines ebenfalls durchgehend zylindrischen Umfanges von unten an diese Laufbahn tangierend anschließenden, im Durchmesser um etwa ein Sechstel kleineren Gegenläufer 18 auf. Zwischen den beiden Läufern 17, 18 ist ein in seiner Weite stufenlos justierbarer Durchlaufspalt gebildet, dessen engste Stelle die Aufsetzstelle 20 bildet, an welcher der jeweilige Lagenteil 11' an die Oberseite der Trägerbahn 10 entgegen Laufrichtung 12 fortschreitend durch Abwälzung übergeben wird.

Die Vorrichtung 15 weist einen gegenüber den Läufern 17, 18 im Außendurchmesser kleineren bzw. gegenüber dem Läufer 17 nur etwa halb so großen Positionierläufer 21 auf, dessen über seinen größten Teil zylindrischer Außenumfang mit der Oberseite des Läufers 17 einen in seiner Weite stufenlos justierbaren Durchlaufspalt für die Lagenteile 11, 11' bildet. Dieser Durchlaufspalt ist gegenüber dem Durchlaufspalt 20 geringfügig in Laufrichtung 12 versetzt. Der Positionierläufer 21 ist als Messerwalze mit einem über seinen Außenumfang vorstehenden, leistenförmigen Scher- bzw. Trennmesser 22 versehen, welches über die Arbeitsbreite der Lagenbahn 11 ununterbrochen durchgeht und mit einem gegenüber dem Gestell 5, 6 starren Gegenmesser 23 so zusammenarbeitet, daß es mit der Laufrichtung der Lagenbahn 11 mitlaufend schneidet. Die Schnittstelle liegt auf der in Laufrichtung 12 abgekehrten Seite des Durchlaufspaltes unmittelbar benachbart zu diesem bzw. zwischen den Umfängen der Läufer 17, 21.

Die engste Stelle des Durchlaufspaltes bildet die Übergabestelle 24, an welcher die Lagenteile 11, 11' vom Umfang des Läufers 21 an den Umfang des Läufers 17 nach und nach über ihre Länge abwälzend übergeben werden, wobei der Abstand der Übergabestelle 24 von der Schnittstelle in Laufrichtung der Läufer 17, 21 und bezogen auf die Achsen dieser Läufer höchstens 15 bis 30° entspricht. Entsprechend diesem Abstand liegt in Dreh- bzw. Laufrichtung vor der Schnittkante des Messers 22 am Umfang des Läufers 21 eine wulstartige Erhöhung, welche sich um die Achse des Läufers 21 über einen Bogenwinkel von etwa 45° erstreckt, einen konvex gekrümmten Scheitel hat und sich über die Arbeitsbreite erstreckt. Beim Vorbeilauf dieses Vorsprunges am Umfang des Läufers 17 hat der Durchlaufspalt seine geringste Weite, so daß der Lagenteil 11' sicher gegen den Läufer 17 angedrückt wird, während ansonsten der Durchlaufspalt um die nur etwa 2 bis 3 mm betragende Höhe der Wulst weiter ist, so daß die Lagenbahn ungehindert bzw. beschädigungsfrei durch den Durchlaufspalt und gegenüber den Umfängen der Läufer 17, 21 verschoben werden kann. Im Augenblick des Querschnittes sichert die Wulst jedoch das in Laufrichtung vor der Schnittstelle liegende Ende der Lagenbahn 11 durch eine geringe Klemmung und unter Zugspannung der Lagenbahn 11, da die Messer 22, 23 den Schnitt dann durchführen, wenn der Scheitel der Wulst seine größte Annäherung an den Umfang des Läufers 17 einnimmt.

Der in Laufrichtung 12 nach den Läufern 17, 18, 21 der Vorrichtungen 14, 15 vorgesehene Vorzug 16 weist unmittelbar oberhalb der Trägerbahn 10 einen als Walze ausgebildeten Vorzugläufer 25 auf, von welchem die Lagenbahn 11 auf der von den Vorrichtungen 14, 15 abgekehrten Seite nach oben zu einem weiteren Vorzugläufer 26 geringfügig größeren Durchmessers geführt ist. Die Läufer 25, 26 sind über einen Zwischentrieb mit gleicher Drehrichtung angetrieben und durch die geringfügig größere Umfangsgeschwindigkeit des Läufers 26 wird die gegenüber Letzterem mit Schlupf gehaltene Lagenbahn 11 zwischen den beiden Läufern 25, 26 unter Zugspannung gehalten. Der von der Lagenbahn 11 über etwa 90° bzw. weniger als 180° umlaufene Läufer 26 bildet einen Bestandteil eines weiteren Vorzugläufers 27, nämlich einer Anzahl nebeneinander liegender, endloser Bänder, die in Nuten des Läufers 26 und am Umfang einer demgegenüber im Durchmesser wesentlich kleineren Umlenkung 28 geführt sind, welche unmittelbar benachbart zur Rückseite des Trägers des Gegenmessers 23 liegt. Die am unteren Trum mit einer Spannvorrichtung federnd unter Spannung gehaltenen Bänder 27 bilden mit ihrem Obertrum zwischen den beiden Umlenkungen 26, 28 eine annähernd geradlinige Laufstrecke für die Lagenbahn 11. Im Bereich dieser Laufstrecke sowie eines an sie anschließenden Teiles 30 des Außenumfanges des Läufers 26 wird durch die Läufer 26, 27 von deren Tragfläche für die Lagenbahn 11 her Luft angesaugt, so daß die Lagenbahn 11 dadurch mit dem genannten Schlupf gegenüber den Läufern 26, 27 gesichert ist. Der dünnwandig rohrförmige Läufer 26 weist z.B. in den Bodenflächen seiner Führungsnuten kranzartig verteilte radiale Saugbohrungen auf und entsprechende Saugbohrungen können die obere Wand eines zwischen den Trumen der Läufer 27 und den Läufern 26, 28 liegenden Saugkastens 29 durchsetzen, wobei diese Wand annähernd an die Umfänge der Läufer 26, 28 anschließt.

Die Läufer 27 sind von Öffnungen durchsetzt, welche die Saugbohrungen überlaufen und dadurch die Saugkraft derart an die Lagenbahn 11 übertragen, daß diese nur über die Bänder 27 sicher mitgenommen, jedoch bereits an der Umlenkung 28 wieder von der Saugkraft befreit wird. Die Bänder 27 können gegenüber ihrer Breite größere Zwischenabstände haben; die Breiten bzw. Zwischenabstände sind über die Arbeitsbreite konstant. In Laufrichtung der Lagenbahn 11 unmittelbar nach der Umlenkung 28 kann eine Gleitfläche für die Lagenbahn 11 anschließen, welche nahezu bis zur Schnittstelle reicht, so daß die Lagenbahn hier, wie durch den Saugkasten 29, sicher abgestützt ist und unter Schubkräften der Schnittstelle bzw. der Übergabestelle 24 zugeführt werden kann.

An der der Vorrichtung 14 zugekehrten Umfangsseite des Läufers 25 liegt ein walzenförmiges Druckglied 31 etwa gleichen Durchmessers mit Radialpressung an, das geringfügig näher bei der Trägerbahn 10 liegt, dessen Außenumfang über mehr als 180° von der Lagenbahn 11 nach oben und zurück nach unten umlaufen wird und das im Bereich eines in seiner Weite stufenlos justierbaren Durchlaufspaltes für die Lagenbahn 11 an dem Umfang des Läufers 25 abgestützt ist. Dieser wird seinerseits von der Lagenbahn 11 über einen Bogenwinkel von etwa 180° umlaufen. Entsprechend ebenfalls frei umlaufende, jedoch gesondert gelagerte, rollenförmige Druckglieder 32 sind auch dem Umfang des Läufers 26, den Läufern 27 bzw. dem Anfang der geraden Laufstrecke zugeordnet, wobei für jedes Band 27 eine an dessen Breite angepaßte gesonderte Laufrolle 32 vorgesehen ist, die einen entsprechenden und stufenlos justierbaren Laufspalt begrenzt sowie gegenüber dem Durchmesser der Läufer 25, 26, 31 etwa um ein Drittel kleiner ist.

In Laufrichtung 12 benachbart zum Läufer 25 bzw. 31 ist die Lagenbahn 11 über ein frei drehbares, walzenförmiges Leitglied 33 geführt, von dessen Unterseite sie unmittelbar zum Druckglied 31 und von dort nach oben und zurück umgelenkt zu den Läufern 25, 26, 27, 28 läuft. Unterhalb der Leitwalze 33 läuft die mit Lagenteilen 11' versehene Trägerbahn 10 berührungsfrei aus der Einheit 2. Die Drehachsen im wesentlichen aller genannten Läufer liegen jeweils etwa parallel zueinander und parallel zu den Ebenen der Bahnen 10, 11.

Der Übergabeläufer 17 ist als dünnwandig rohrförmige Hohlwalze ausgebildet, in welcher Steuermittel vorgesehen sind, um in mehreren über den Umfang aneinanderschließenden Sektoren eine unterschiedliche Haltekraft für die Lagenteile 11' bewirken zu können. An den Innenumfang des Läufers 17 schließen in Umfangsrichtung mindestens vier, insbesondere fünf etwa gleiche Bogenwinkel einnehmende Kammern 34 bis 38 an, die jeweils durch ein schmales, radialstegförmiges Trennglied 39 voneinander getrennt sind, welches mit einem in seiner äußeren Längskante radial federnd verschiebbaren, leistenförmigen Dichtglied unter Pressung am Innenumfang des Läufers 17 geführt ist. Die der jeweiligen Kammer zugekehrte Kante der Kanten- bzw. Dichtfläche des Dichtgliedes bildet eine Steuerkante, welche die Kammer gegenüber der benachbarten druckdicht trennt. Die fünf Trennglieder 39 sind radial abstehend am Umfang eines walzenförmigen Kernes 40 befestigt, welcher im Querschnitt in einem Kranz um seine Achse eine der Anzahl der Kammern entsprechende Anzahl von Längsbohrungen aufweist, die jeweils über Querbohrungen an eine der zugehörigen Kammern angeschlossen sind. Diese Bohrungen 41 bzw. die Längsbohrungen sind an einem von der Antriebsseite abgekehrten Ende des Kernes 40 an gesonderte Fluidleitungen angeschlossen, so daß jede der Kammern unabhängig von den übrigen mit dem gewünschten Fluiddruck bzw. Unterdruck beaufschlagt werden kann. An der Innenseite der zugehörigen Seitenwange ist der Läufer 17 auf einem erweiterten Endbund des Kernes 40 gelagert, welcher mit seinem anderen Ende in einem Endflansch des Läufers 17 gelagert ist. Der Kern 40 bzw. die Steuerkanten können dadurch gegenüber dem Gestell 5, 6 und den Stellen 20, 24 stufenlos verdreht und in jeder Lage festgesetzt werden, z.B. mit einer an dem Anschlußende des Kernes 40 vorgesehenen Handhabe oder einem Stelltrieb. Der Läufer 17 kann mit dem Kern 40 unabhängig von allen anderen Läufern ausgewechselt werden, um durch Wahl seines Umfangsmaßes auf unterschiedliche Formatbereiche umzustellen.

Der Mantel des Läufers 17 ist in einem feinen Raster über den Umfang und seine Länge gleichmäßig von Radialbohrungen durchsetzt, deren im Außenumfang liegende Enden bzw. Öffnungen somit an die jeweils überlaufene Kammer angeschlossen sind. Zum Beispiel können Bohrungen von etwa 2 mm Durchmesser und etwa 8 mm Achsabstand jeweils abwechselnd versetzt in zueinander benachbarten parallelen Reihen vorgesehen sein, so daß auch kleinste Lagenteile 11' gehalten werden können. Von den Kammern, die sich jeweils über einen Bogenwinkel zwischen 60° und 90° erstrecken, wird die im Bereich der Übergabestelle 24 liegende Kammer 34 zweckmäßig mit Vakuum beaufschlagt, wobei diese Kammern von der Übergabestelle 24 entgegen Laufrichtung des Läufers 17 eine kleinere Ausdehnung als in Laufrichtung hat. Die in Laufrichtung an die Kammer 34 anschließenden und annähernd bis zur Aufsetzstelle 20 reichenden Kammern 35, 36 werden ebenfalls mit Vakuum beaufschlagt, das höher als im Bereich der Kammer 34 sein kann, um eine vollständig schlupffreie Sicherung der Lagenteile 11' in diesem Bereich zu gewährleisten. Etwa im Bereich der Aufsetzstelle 20 bzw. entgegen Laufrichtung weniger als zehn Winkelgrade davor liegt die vordere Steuerkante der Vakuumkammer 36, wobei die in Laufrichtung anschließende Kammer 37 Normaldruck hat oder mit Druckluft beaufschlagt ist, so daß in ihrem Bereich der Umfang des Läufers 17 die Teile 10, 11' nicht mitnimmt, sondern abstößt. Das in Laufrichtung vordere Ende des Lagenteiles 11' wird somit unmittelbar vor der Aufsetzstelle 20 von der Haltekraft freigegeben, jedoch noch durch den dahinter im Bereich der Kammer 36 liegenden Abschnitt gehalten, der während des haftenden Aufsetzens auf die Trägerbahn 10 nach und nach freigegeben wird. Durch die regelbaren Kammern können die Druckzonen dem jeweiligen Übergabeablauf und den verwendeten Materialien genau angepaßt werden. Die zwischen den Kammern 37 und 34 liegende Kammer 38 kann mit Atmosphärendruck beaufschlagt sein.

Zur Reinigung der Umfangsfläche des Läufers 17 sind Reinigungsmittel vorgesehen, welche in Laufrichtung unmittelbar nach der Aufsetzstelle 20 eine mit einem Friktionstrieb, z.B. vom Umfang des Läufers 17, angetriebene Bürstenwalze 42 aufweisen. Diese rotiert mit Relativgeschwindigkeit am Außenumfang des Läufers 17, wobei radial aus ihr heraus silikonisierte Luft gegen diesen Umfang ausgeblasen werden kann, um Ablagerungen am Läufer 17 zu verhindern.

Durch die Leitwalze 19 wird die Trägerbahn 10 nicht rechtwinklig, zur gemeinsamen Axialebene der Läufer 17, 18 deren Durchlaufspalt, sondern unter wenigen Winkelgraden dem Umfang des Gegenläufers 18 angenähert zugeführt, so daß sichergestellt ist, daß erst an der engsten Stelle des Durchlaufspaltes 20 eine gegenseitige Berührung zwischen Trägerbahn 10 und Lagenteil 11' erfolgt.

Zur Änderung der Spaltweite ist nur der Gegenläufer 18 radial gegenüber dem Gestell 5, 6 mit einer als Antrieb einen Fluidzylinder aufweisenden Stellvorrichtung 43 bewegbar gelagert. Das Drehlager des Läufers 18 kann in einem Exzenterlager aufgenommen sein, dessen Drehbewegungen zur genannten Verstellung führen. In seiner dem Läufer 17 am nächsten angenäherten Lage ist der Läufer 18 durch einen stufenlos einstellbaren Anschlag 44, z.B. einen Exzenteranschlag, begrenzt, der mit einer Handhabe von der Außenseite der zugehörigen Wange 5 eingestellt werden kann. Dadurch kann der Durchlaufspalt bzw. Spendekanal den Materialstärken von Trägerbahn und Lagenmaterial 11, 11' genau angepaßt werden. Mit entsprechend ausgebildeter Exzenterlagerung, Stellvorrichtung 45 und Anschlag 46 kann mit den genannten Wirkungen auch der Läufer 21 radial gegenüber dem Läufer 17 verstellt bzw. justiert wrden. Die Antriebe der Stellvorrichtungen 43, 45 liegen zweckmäßig etwa horizontal auf der jeweils vom Läufer 17 abgekehrten Seite des zugehörigen Läufers 18 bzw. 21. Auch der Läufer 31 ist mit einer entsprechenden Stellvorrichtung 47 gegen einen stufenlos einstellbaren Anschlag 48 zustellbar, wobei das Abheben der Läufer 28, 21, 31 vom jeweils zugehörigen Läufer 17, 25 auch das Einführen der Materialbahnen in die Einheit 2 wesentlich erleichtert.

An den Innenumfang des Läufers 26 schließt eine den Halteumfang 30 begrenzende Kammer 50 an, die ähnlich wie im Falle des Läufers 17 durch einen Kern mit Trenngliedern und einer Anschlußbohrung gebildet ist, gegenüber welchen der Läufer 26 im Betrieb rotiert. Im Bereich der freien Laufstrecke zwischen den Läufern 25, 26 kann die Trägerbahn 11 bearbeitet, z.B. durch eine Auftragvorrichtung 51 mit einem Heißleimauftrag versehen werden. Jede der Rollen 32 ist unabhängig von den übrigen mit einer Stellvorrichtung 52 gegenüber dem Läufer 26 bzw. 27 stufenlos querverstellbar. Auch ist jede Rolle 32 für sich etwa parallel zu ihrer Achse gegenüber dem Gestell 5, 6 an einer Schiene stufenlos querverstellbar und durch Klemmung festsetzbar geführt. Der Läufer 31 ist über den größten Teil seines von der Lagenbahn 11 umlaufenen Umfangsbereiches von einem zu diesem etwa parallelen Leitglied 53 abgedeckt, durch welches beim Einfädeln die Lagenbahn 11 leicht bis zur Übergabe an den Läufer 25 um den Läufer 31 geschoben werden kann. Der Leimauftrag durch die Vorrichtung 41 erfolgt zweckmäßig an derselben Seite, an welchen auch die Rollen 32 laufen, jedoch seitlich gegenüber den Leimzonen in leimfreie Zonen versetzt. Der jeweilige Läufer 25, 26, 27 kann auch in gewünschter Weise temperiert, z.B. zur Vermeidung zu hoher Temperaturen durch den Leimauftrag gekühlt werden, beispielsweise durch eine Umlaufkühlung in den Kammern bzw. im Saugkasten.

Im wesentlichen alle angetriebenen Läufer werden von derselben Gestellseite her, und zwar an der Außenseite der Wange 5 angetrieben. Von dem Abtriebsritzel 55 des bei 54 angedeuteten und an der Außenseite der zugehörigen Gestellwange 7 liegenden Überlagerungs-Getriebes 54 wird der Läufer 17 über einen einstufigen Riementrieb 56 schlupffrei angetrieben. Dieser treibt über eine Getriebestufe 57 aus einer Stahl-/Kunststoff-Zahnradpaarung unmittelbar den Läufer 18 an. Das Getriebe 54 wird über eine mehrere Arbeitseinheiten der Maschine antreibende Hauptwelle angetrieben, wobei durch das Überlagerungsgetriebe 54 eine Schlupfkompensation durch die Vorwahl einer Permanentüberlagerung möglich ist. Die Vorrichtung 15 bzw. der Läufer 21 wird durch einen unmittelbar in dessen Achse liegenden, durch Beschleunigung und Verzögerung beliebig drehstellungssteuerbaren Antrieb 58 angetrieben, welcher mit dem Läufer 21 radial verstellbar ist. Durch einen entsprechenden Antrieb 59 wird auch der Vorzug 16 bzw. der Läufer 25 angetrieben, wodurch auch der Antrieb der Läufer 26, 27, 31 erfolgt. Alle Antriebe sind in der beschriebenen Weise unabhängig voneinander steuer- bzw. regelbar. Sie werden nach Druckmarken an den Bahnen 10, 11 gesteuert, aufgrund deren Erfassung die Lagenteile 11' und die Trägerbahn 10 nach Vorgabe paßgenau zusammengeführt werden. Soll die Lagenbahn 11 ohne Aufteilung in einzelne Lagenteile endlos auf die Trägerbahn 10 aufgebracht werden, so läuft der Vorschub 16 synchron zum Läufer 17 bzw. zur Trägerbahn 10, und der Läufer 21 wird entweder durch die Stellvorrichtung 45 vom Läufer 17 abgehoben oder in eine solche Drehstellung überführt, daß die Wulst außerhalb des Durchlaufspaltes 24 liegt und daher durch diesen ein freier Durchlauf der Lagenbahn 11 möglich ist.

Um insbesondere den Läufer 21 mit geringen Masseträgheiten gut positiv und negativ beschleunigen zu können, ist er ohne Zwischengetriebe angetrieben bzw. besteht sein Kern 60 im wesentlichen aus glasfaserverstärktem Kunststoff, in welchen auch das Messer 22 eingreift. Der Kern ist von Hohlkammern 21 durchsetzt, z.B. von Längsbohrungen, die in einem Kranz um seine Achse und/oder in seiner Achse liegen, wobei sowohl im Bereich des Messers 22 als auch diametral gegenüberliegend keine Hohlkammern vorgesehen sind, so daß auf einfache Weise ein Wucht-Gegengewicht zum Messer 22 unmittelbar durch den Kern 60 geschaffen ist. Der Umfang kann durch den Kern 60 oder einen gesonderten Mantel gebildet sein. Wie anhand des Läufers 17 beschrieben, wird auch der Umfang des Läufers 21 mit einer Reinigungsvorrichtung, z.B. einer Bürstenwalze 62, gereinigt, wobei auch hier silikonisierte Luft zugeführt werden kann. Die Bürstenwalze 62 ist durch den Läufer 21 und gegenläufig zu diesem über einen Riementrieb angetrieben. Wird eine einseitig beleimte Lagenbahn 11 bzw. werden so beleimte Lagenteile 11' zugeführt, so sind die zugehörigen, durch die Läufer gebildeten Tragflächen des Vorzuges 16 zweckmäßig mit einem nichthaftenden Material beschichtet.

Zum Aufbringen der Lagenteile 11' auf die Trägerbahn 10 wird letztere durch den Durchlaufspalt 20 ständig im wesentlichen kontinuierlich durchbewegt, wobei die Umfangsgeschwindigkeit des Läufers 17 synchron zur Laufgeschwindigkeit der Trägerbahn 10 vorgesehen ist, so daß im Aufsetzpunkt 20 keine Relativgeschwindigkeiten zu Aufsetztoleranzen führen können. Die Lagenbahn 11 durchläuft den Vorzug 16 in der beschriebenen Weise, gelangt mit ihrem vorderen Ende in den Durchlaufspalt 24, wird im Bereich der Kammer 34 mit der Möglichkeit des Schlupfes vom kontinuierlich drehenden Umfang des Läufers 17 geringfügig herangezogen, und dann wird ein Lagenteil 11' durch das mit dem Umfang des Läufers 17 gleichgerichtet mitlaufende Messer 22 abgetrennt, wobei gleichzeitig der Lagenteil 11' im wesentlichen schlupffrei fest gegen den Umfang des Läufers 17 angelegt wird. Dieser Lagenteil 11' wird dann vom Läufer 17 von der Übergabestelle 24 über mehr als 180° zunächst entgegen Laufrichtung 12 und dann nach unten über die Bereiche der Kammern 35, 36 mitgenommen, in welchen die Haltekraft des Läufers 17 durch entsprechend hohen Vakuum ausreichend stark ist, um jegliche Relativbewegung des Lagenteiles 11' gegenüber dem Läufer 17 zu vermeiden.

Im Bereich der Aufsetzstelle 20 läuft der Lagenteil 11' dann im wesentlichen gleichgerichtet zur Trägerbahn 10, wobei er in den Bereich der Kammer 37 gelangt, also sich vom Läufer 17 ablöst und an die zugehörige Seite der Trägerbahn 10 anlegt. Dadurch, wie der Lagenteil 11' auf dem Läufer 17 positioniert wird, wird somit auch seine Positionierung auf der Trägerbahn 10 bestimmt, wobei der Läufer 17 eine möglichst schlupffreie Übertragung auf die Trägerbahn 10 ermöglicht. Eventuell doch im Bereich der Übergabestelle 24 auftretender Schlupf kann in der beschriebenen Weise durch auf den Läufer 17 wirkende Drehüberlagerung kompensiert werden. Das Format der Lagerteile 11' und die Formatfelder der Trägerbahn 10 können unabhängig voneinander verändert werden, ebenso die Anzahl der je Formatfeld in Laufrichtung 12 hintereinander aufzubringenden, nacheinander von der Bahn abgetrennten Lagenteile, weil der Läufer 21 unabhängig von der Trägerbahn 10 beschleunigt werden und daher gegenüber dieser in jedem beliebigen Übersetzungsverhältnis angetrieben werden kann. Durch die Steuerung des Läufers 21 können selbst sehr kleine Lagenteile 11' so übergeben werden, daß sie mindestens zwei Saugöffnungen des Läufers 17 vollständig abdecken.

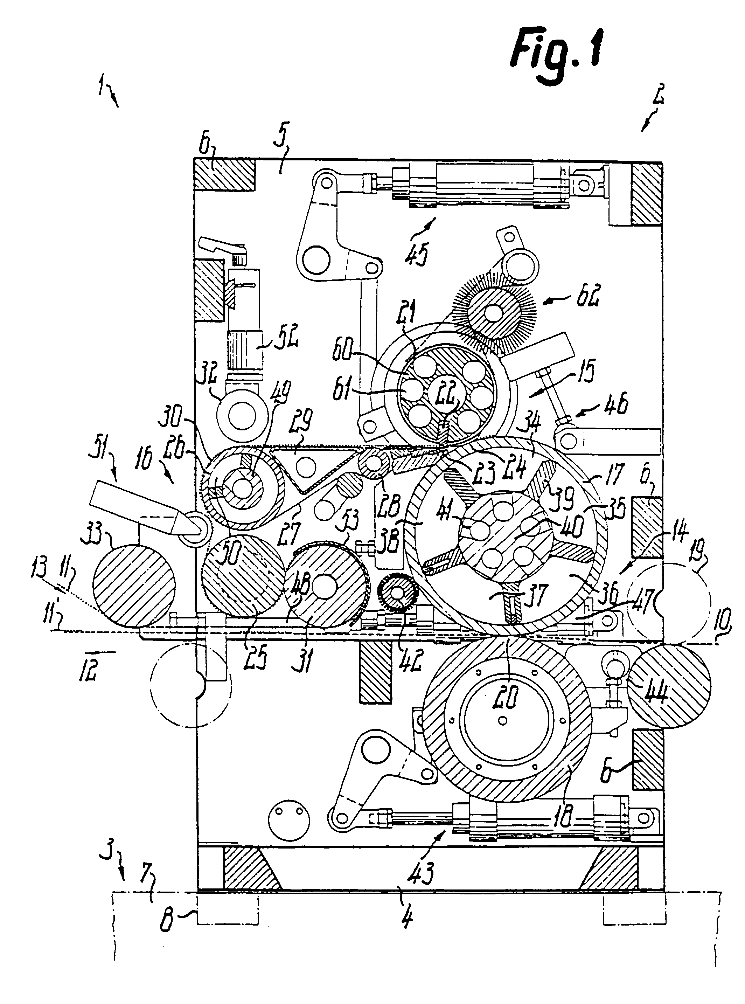

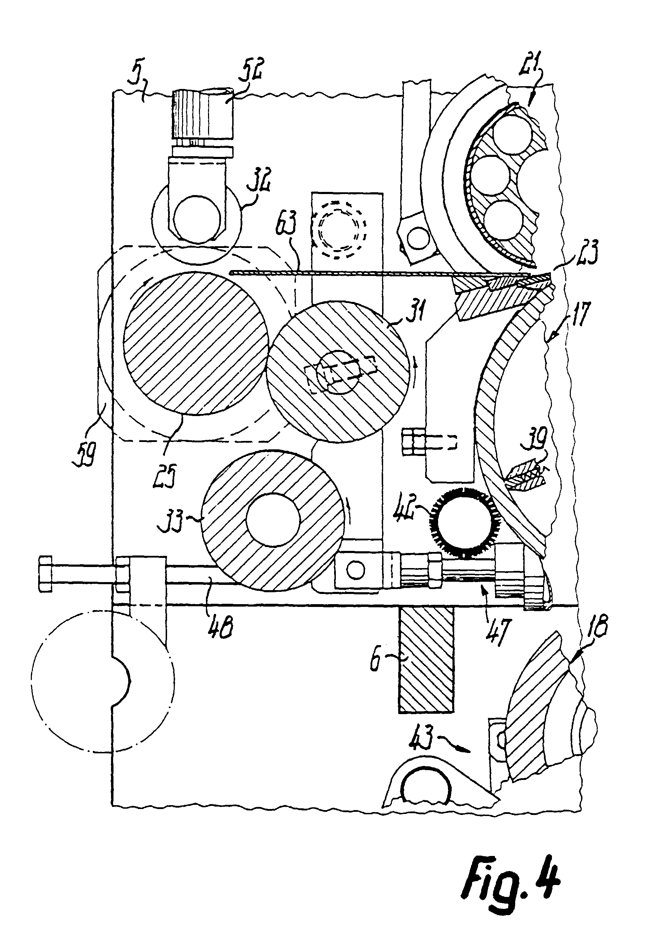

Bei der Ausführungsform nach Fig. 4 wird die nicht näher dargestellte Lagenbahn 11 vom Leitglied 33 schräg nach oben über den Umfang des Druckgliedes 31 und von diesem unter S-förmiger Umlenkung über einen Bogenwinkel von annähernd 270° über den Umfang des Läufers 25 geführt. Von dessen Oberseite läuft die Lagenbahn über ein Leitglied 63, z.B. einen Tisch, welcher wie das Leitglied nach Fig. 1 annähernd bis zur Schneidkante des Gegenmessers 23 reicht. Dadurch kann auf eine Bänderstrecke verzichtet werden.

## Patentansprüche

1. Einrichtung zur Bearbeitung von Material, wie Lagen-Material, insbesondere zum Aufbringen mindestens eines Lagenteiles (11, 11') auf wenigstens einen Trägerteil (10), mit einem Einrichtungsgestell (5, 6) und Arbeitsläufern, die einen Vorzugläufer (25, 26, 27), einen Positionierläufer (21) und/oder einen Übergabeläufer (17) für den jeweiligen Lagenteil (11') umfassen und mit einem Vorzugantrieb (59), einem Positionierantrieb (58) bzw. einem Übergabeantrieb (54) im Arbeitsbetrieb der Einrichtung mit Relativgeschwindigkeiten antreibbar sind, dadurch gekennzeichnet, daß mindestens zwei der Arbeitsläufer (17, 21, 25, 26, 27, 28) im Arbeitsbetrieb der Einrichtung mit dynamisch veränderbarer Relativgeschwindigkeit antreibbar sind.

2. Einrichtung nach Anspruch 1, dadurch gekennzeichnet, daß mindestens zwei Arbeitsläufer (17, 21, 25) mit gesonderten Motoren antreibbar sind, beispielsweise der Vorzugläufer (25, 26, 27, 28) und/oder der Positionierläufer (21) über je einen vektorgeregelten Asynchronmotor (59, 58) bzw. der Übergabeläufer (17) von einer Hauptwelle über ein Überlagerungsgetriebe (54) und daß vorzugsweise der jeweilige Motor (58, 59) unmittelbar in der Achse des zugehörigen Arbeitsläufers (21, 25) liegt bzw. das Überlagerungsgetriebe (54) an einem Grundgestell (3) angeordnet und über einen Zwischentrieb (56) mit einer, Arbeitsläufer (17, 18, 19, 21, 25, 26, 27, 28, 32, 33, 42, 62) tragenden sowie vom Grundgestell (3) zerstörungsfrei abnehmbaren Arbeitseinheit (2) antriebsverbindbar ist.

3. Einrichtung nach Anspruch 1 oder 2, dadurch gekennzeichnet, daß der Positionierläufer (21) als Trennläufer zum Trennen der Lagenteile (11') von einer Lagenbahn (11) und/oder zur unmittelbaren Übergabe der einzelnen Lagenteile (11') an den Übergabeläufer (17) ausgebildet ist, daß insbesondere der Positionierläufer (21) als Messerwelle mit im wesentlichen gleichsinnig rotierendem sowie mit einem feststehenden Gegenmesser (23) zusammenarbeitenden Trennmesser (22) ausgebildet ist und daß vorzugsweise zwischen dem Positionierläufer (21) und dem Übergabeläufer (17) ein in Abhängigkeit von der Drehstellung des Positionierläufers (21) in seiner Weite veränderbarer Durchlaufspalt (24) zur relativen Vorschubbewegung der Lagenbahn (11) gegenüber dem Positionierläufer (21) sowie dem Übergabeläufer (17) vor dem Trennen des jeweiligen Lagenteiles (11') vorgesehen ist.

4. Einrichtung nach einem der vorhergehenden Ansprüche, dadurch gekennzeichnet, daß der Positionierläufer (21) wenigstens teilweise in Leichtbauweise mit gegenüber einer Ausbildung aus einem Stahlwerkstoff wesentlich geringerem spezifischem Volumengewicht ausgebildet ist, daß insbesondere der Positionierläufer (21) über seine Länge im Querschnitt aus einem faserverstärkten nichtmetallischen Werkstoff besteht und/oder mit Hohlräumen (61) versehen ist und daß vorzugsweise der Positionierläufer (21) in die Oberseite des Übergabeläufers (17) bzw. unmittelbar nach der Trennstelle des Trennläufers in den Übergabeläufer (17) eingreift.

5. Einrichtung nach einem der vorhergehenden Ansprüche, dadurch gekennzeichnet, daß der Übergabeläufer (17) als Saugwalze ausgebildet ist, deren Umfang wenigstens von der Übernahmestelle (24) für den Lagenteil (11') bis zur mehr als 180° entfernten Abgabestelle (20) an den Trägerteil (10) gesonderten Steuerkammern (34 bis 38) zugeordnet ist, daß insbesondere benachbarte Kammern durch Steuerkanten voneinander getrennt und diese um die Achse des Übergabeläufers (17) stufenlos verstellbar sind und daß vorzugsweise in dem Übergabeläufer (17) ein Sternkörper (39, 40) mit einer Wellennabe (40) und von dieser abstehenden Sternstegen (39) angeordnet ist, wobei zwischen benachbarten Sternstegen (39) jeweils ein gesonderter Druck-Steuerkanal (41) der Wellennabe (40) mündet.

6. Einrichtung nach einem der vorhergehenden Ansprüche, dadurch gekennzeichnet, daß zwischen dem Vorzugläufer (25) und dem Positionier- bzw. dem Übergabeläufer (21, 17) ein Bahn-Spannungsvorzug (26, 27, 28) für die Lagenbahn (11) angeordnet ist, daß insbesondere der Spannungsvorzug eine Vakuumsicherung (29, 50) für die Lagenbahn (11) aufweist und daß vorzugsweise der Spannungsvorzug eine im wesentlichen geradlinige Zuführung der Lagenbahn (11) zum nachfolgenden Arbeitsläufer (17, 21) bildet.

7. Einrichtung nach einem der vorhergehenden Ansprüche, dadurch gekennzeichnet, daß der Trägerteil (10) in einer Laufrichtung (12) annähernd horizontal einem Übergabespalt (20) zwischen dem Übergabeläufer (17) und einem Gegendruckläufer (18) zugeführt wird, daß insbesondere der Lagenteil (11) etwa gegen Laufrichtung (12) dem in Laufrichtung (12) nach dem Übergabespalt (20) angeordneten Vorzug (16) und/oder dem Positionierläufer (21) zugeführt wird und daß vorzugsweise der Lagenteil (11) nach dem Vorzugläufer (25) über eine Gleitstrecke (63) unmittelbar dem Positionierläufer (21) zugeführt wird.

8. Einrichtung nach einem der vorhergehenden Ansprüche, dadurch gekennzeichnet, daß der jeweilige, von zwei Arbeitsläufern (17, 18 bzw. 17, 21 bzw. 25, 31 bzw. 26, 32) begrenzte Durchlaufspalt für den Lagenteil (11, 11') und/oder den Trägerteil (10) in seiner Arbeits-Spaltweite justierbar bzw. zum Einführen des Lagen- bzw. Trägerteiles aufweitbar ist, daß insbesondere Drehlagerungen des Positionierläufers (21), des Gegendruckläufers (18) und/oder wenigstens eines Andrückläufers (31, 32) für den Vorzugläufer (25, 26, 27) exzentrisch am Einrichtungsgestell gelagert sind und daß vorzugsweise zur Justierung der jeweiligen Arbeits-Spaltweite ein stufenlos einstellbarer Anschlag (44, 46, 48) vorgesehen ist.

9. Einrichtung nach einem der vorhergehenden Ansprüche, dadurch gekennzeichnet, daß sie zum gleichzeitigen Aufbringen von Lagenteilen (11') in mehreren nebeneinander liegenden Nutzenbreiten des Trägerteiles (10) ausgebildet ist, daß sie insbesondere in einer Stellung zur mehrlagigen Zusammenführung einer kontinuierlichen Lagenbahn (11) mit dem Trägerteil (10) ausgebildet ist und daß vorzugsweise der Übergabeläufer (17) mit seiner Sauglochung im Arbeitsbetrieb durch Drehüberlagerung auf Erfassung des jeweiligen Lagenteiles (11') einstellbar ist.

10. Einrichtung nach einem der vorhergehenden Ansprüche, dadurch gekennzeichnet, daß das Einrichtungsgestell eine rahmenförmige, zwei Lagerwangen (5) im unteren Bereich als Traverse verbindende Basis (4) zum Abstützen auf einem Grundgestell (3) aufweist, daß insbesondere die Basis (4) einen Laufwagen mit quer zur Laufrichtung (12) der Trägerbahn (10) liegender Rollrichtung bildet und daß vorzugsweise die Antriebsverbindung zwischen der Übergabevorrichtung (14) und dem Überlagerungsgetriebe (54) durch einen Riementrieb (56) gebildet ist.

## Claims

1. Apparatus for working material, such as layer material, particularly for applying at least one layer part (11, 11') to at least one support part (10), with an apparatus frame (5, 6) and working rotors, which comprise a feed rotor (25, 26, 27), a positioning rotor (21) and/or a transfer rotor (17) for the particular layer part (11') and with a feed drive (59), a positioning drive (58) and a transfer drive (54) drivable at relative speeds in the working operation of the apparatus, characterized in that at least two of the working rotors (17, 21, 25, 26, 27, 28) in the working operation of the apparatus can be driven with a dynamically variable relative speed.

2. Apparatus according to claim 1, characterized in that at least two working rotors (17, 21, 25) are drivable with separate motors, e.g. the feed rotor (25, 26, 27, 28) and/or positioning rotor (21) by means of in each case a vector-regulated asynchronous motor (59, 58) or the transfer rotor (17) by a main shaft by means of a superimposing gear (54) and that preferably the particular motor (58, 59) is located directly in the axis of the associated working rotor (21, 25) and the superimposing gear (54) is located on a base frame (3) and is drive-connectable by means of an intermediate drive (56) to a working unit (2) carrying a working rotor (17, 18, 19, 21, 25, 26, 27, 28, 32, 33, 42, 62) and removable in non-destructive manner from the base frame (3).

3. Apparatus according to claim 1 or 2, characterized in that the positioning rotor (21) is constructed as a separating rotor for separating the layer parts (11') from a layer web (11) and/or for the direct transfer of the individual layer parts (11') to the transfer rotor (17), that in particular the positioning rotor (21) is constructed as a cutting knife with substantially equidirectionally rotating separating knife (22) cooperating with a fixed counterknife (23) and that preferably between the positioning rotor (21) and the transfer rotor (17) is provided a passage gap (24) whose width is variable as a function of the rotary position of the positioning rotor (21) for the relative feed movement of the layer web (11) with respect to the positioning rotor (21) and the transfer rotor (17) prior to the separation of the particular layer part (11').

4. Apparatus according to one of the preceding claims, characterized in that the positioning rotor (21) at least in part has a lightweight construction with a much lower specific volume weight than in the case of a steel material construction, that in particular the positioning rotor (21) over its length in cross-section is made from a fibre-reinforced, nonmetallic material and/or is provided with cavities (61) and that preferably the positioning rotor (21) engages in the top of the transfer rotor (17) or immediately following the separation point of the separating rotor in the transfer rotor (17).

5. Apparatus according to one of the preceding claims, characterized in that the transfer rotor (17) is constructed as a suction roller, whose circumference has associated with it at least from the transfer point (24) for the layer part (11') to a delivery point (20) at more than 180° therefrom to the support part (10) separate control chambers (34 to 38), that in particular neighbouring chambers are separated from one another by control edges and are continuously adjustable about the axis of the transfer rotor (17) and that preferably in the transfer rotor (17) is provided astar body (39,40) with a shaft hub (40) and star webs (39) projecting therefrom and between adjacent star webs (39) in each case issues a separate pressure control channel (41) of the shaft hub (40).

6. Apparatus according to one of the preceding claims, characterized in that between the feed rotor (25) and the positioning or transfer rotor (21, 17) is provided a web tension feed (26, 27, 28) for the layer web (11), that in particular the tension feed has a vacuum securing means (29, 50) for the layer web (11) and that preferably the tension feed forms a substantially linear supply of the layer web (11) to the following working rotor (17, 21).

7. Apparatus according to one of the preceding claims, characterized in that in an approximately horizontal running direction (12) the support part (10) is supplied to a transfer gap (20) between the transfer rotor (17) and a counterpressure rotor (18), that in particular the layer part (11) is supplied roughly counter to the running direction (12) to the feed (16) positioned in the running direction (12) following the transfer gap (20) and/or to the positioning rotor (21) and that preferably the layer part (11), following the feed rotor (25), is supplied via a sliding section (63) directly to the positioning rotor (21).

8. Apparatus according to one of the preceding claims, characterized in that the passage gap for the layer part (11, 11') and/or the support part (10) bounded by two working rotors (17, 18 or 17, 21 or 25, 31 or 26, 32) can be adjusted in its working gap width or can be widened for introducing the layer or support part, that in particular the rotary bearings of the positioning rotor (21), counterpressure rotor (18) and/or at least one pressing rotor (31, 32) for the feed rotor (25, 26, 27) are mounted eccentrically on the apparatus frame and that preferably for adjusting the particular working gap width a continuously adjustable stop (44, 46, 48) is provided.

9. Apparatus according to one of the preceding claims, characterized in that it is constructed for the simultaneous application of layer parts (11') in several juxtaposed useful widths of the support part (10), that it is in particular constructed for the multilayer bringing together of a continuous layer web (11) with the support part (10) and that preferably the transfer rotor (17) with its suction hole in working operation is adjustable by rotary superimposing to the determination of the particular layer part (11').

10. Apparatus according to one of the preceding claims, characterized in that the apparatus frame has a frame-like base (4) connecting two bearing sides (5) in the lower region as a crossmember for supporting on a base frame (3), that in particular the base (4) forms a trolley with a rolling direction at right angles to the running direction (12) of the support web (10) and that preferably the drive connection is formed by a belt drive (56) between the transfer mechanism (14) and the superimposing gear (54).

## Revendications

1. Dispositif pour le traitement de matière telle que de la matière superposée en particulier pour l'application d'au moins une partie superposée (11, 11') sur au moins une partie support (10), comprenant un bâti de dispositif (5, 6) et des rouleaux de travail qui comprennent un rouleau d'avance (25, 26, 27), un rouleau de position (21) et/ou un rouleau de transfert (17) pour la partie superposée (11') et comprenant un entraînement d'avance (59), un entraînement de position (58) respectivement un entraînement de transfert (54) en fonctionnement de travail du dispositif pouvant être entraînés à des vitesses relatives, caractérisé en ce qu'au moins deux des rouleaux de travail (17, 21, 25, 26, 27, 28) sont entraînés en mode de travail du dispositif avec une vitesse relative dynamiquement variable.

2. Dispositif selon la revendication 1, caractérisé en ce qu'au moins deux rouleaux de travail (17, 21, 25) sont entraînés avec des moteurs séparés par exemple le rouleau d'avance (25, 26, 27, 28) et/ou le rouleau de positionnement (21) par un moteur asynchrone (59, 58) à réglage vectoriel respectivement le rouleau de transfert (17) par un arbre principal par l'intermédiaire d'un engrenage de superposition (54) et en ce que de préférence le moteur respectif (58, 59) se trouve directement dans l'axe du rouleau de travail (21, 25) respectif respectivement l'engrenage de superposition (54) est disposé sur un bâti de base (3) et par l'intermédiaire d'un entraînement intermédiaire (56) est reliable en entraînement à une unité de travail (2) amovible sans destruction du bâti de base (3) et portant les rouleaux de travail (17, 18, 19, 21, 25, 26, 27, 28, 32, 33, 42, 62),

3. Dispositif selon la revendication 1 ou 2,
caractérisé en ce que le rouleau de position (21) fait office de rouleau de séparation pour la séparation des parties superposées (11') de la bande superposée (11) et/ou pour le transfert direct des parties superposées (11') au rouleau de transfert (17), en ce qu'en particulier, le rouleau de position (21) fait office d'arbre porte-lame avec une lame de séparation (22) coopérant avec une lame antagoniste (23) fixe tournant sensiblement dans le même sens et en ce que de préférence entre le rouleau de positionnement (21) et le rouleau de transfert (17), il est prévu une fente de passage (24) variable en largeur en fonction de la position rotative du rouleau de positionnement (21)pour un mouvement d'avance relative de la bande superposée (11) par rapport au rouleau de positionnement (21) ainsi qu'au rouleau de transfert (17) avant la séparation de la partie superposée respective (11').

4. Dispositif selon l'une des revendications précédentes, caractérisé en ce que le rouleau de position (21) est réalisé au moins partiellement dans une construction légère par rapport à une réalisation en acier avec un poids volumique spécifique sensiblement plus faible, en ce qu'en particulier, le rouleau de positionnement (21) se compose d'une matière non métallique renforcée aux fibres de verre sur sa longueur en coupe transversale et/ou est munies de cavités creuses (61) et en ce que de préférence, le rouleau de positionnement (21) s'engage dans la face supérieure du rouleau de transfert (17) respectivement directement après le point de séparation du rouleau de séparation dans le rouleau de transfert (17).

5. Dispositif selon l'une des revendications précédentes, caractérisé en ce que le rouleau de transfert (17) fait office de cylindre d'aspiration, dont la périphérie est associée à la partie supérieure (10) des chambres de commande séparées (34 à 38) au moins depuis le point de transfert (24) pour la partie superposée (11') jusqu'au point de remise (20) éloigné de plus de 180°, en ce qu'en particulier des chambres voisines sont séparées par des bords de commande et sont réglables en continu autour de l'axe du rouleau de transfert (17) et en ce que de préférence dans le rouleau de transfert (17), il est disposé un corps en forme d'étoile (39, 40) avec un moyeu d'arbre (40) et des branches d'étoiles (39) se dégageant, un canal de commande de pression séparé (41) du moyeu de l'arbre (40) étant disposé entre les branches d'étoiles voisines (39).

6. Dispositif selon l'une des revendications précédentes, caractérisé en ce qu'entre le rouleau d'avance (25) et le rouleau de position respectif de transfert (21, 17) est disposée une avance de tension de bande (26, 27, 28) pour la bande superposée, en ce qu'en particulier l'avance de tension présente une sécurité de vide (29, 50) pour la bande superposée (11) et en ce que de préférence l'avance de tension forme une amenée sensiblement linéaire de la bande superposée (11) au rouleau de travail suivant (17, 21).

7. Dispositif selon l'une des revendications précédentes, caractérisé en ce que la partie support (10) est amenée dans un sens de défilement (12) approximativement horizontal à une fente de transfert (20) entre le rouleau de transfert (17) et un rouleau de contre-pression (18) en ce qu'en particulier, la partie superposée (11) est amenée à l'encontre du sens de défilement (12) à l'avance (16) disposée dans le sens de défilement (12) après la fente de transfert (20) et/ou au rouleau de positionnement (21) et en ce que de préférence la partie superposée (11) est amenée après le rouleau d'avance (25) par l'intermédiaire d'une trajectoire de glissement (63) directement au rouleau de positionnement (21).

8. Dispositif selon l'une des revendications précédentes, caractérisé en ce que la fente de passage respective limitée par deux rouleaux de travail (17, 18, respectivement 17, 21, respectivement 25, 31 respectivement 26, 32) pour la partie supérieure (11, 11') et/ou la partie superposée (10) est ajustable et peut être élargie pour l'insertion de la partie superposée ou support, en ce qu'en particulier des paliers rotatifs du rouleau de position (21), du rouleau de contre pression (18) et/ou au moins d'un rouleau de pression (31, 32) pour le rouleau d'avance (25, 26, 27) sont logés de manière excentrique sur le bâti du dispositif et en ce que de préférence pour l'ajustage de la largeur de fente de travail respective, une butée réglable en continu (44, 46, 48) est prévue.

9. Dispositif selon l'une des revendications précédentes, caractérisé en ce qu'il est conçu pour une application simultanée de parties superposées (11') dans plusieurs largeurs utiles les unes à côté des autres de la partie support (10), en ce qu'il est conçu en particulier dans une position pour l'assemblage sur plusieurs couches d'une bande superposée (11) avec une partie support (10) et en ce que de préférence, le rouleau de transfert (17) est réglable avec son trou d'aspiration en mode de travail par transmission en rotation à la détection de la partie superposée (11') respective.

10. Dispositif selon l'une des revendications précédentes, caractérisé en ce que le bâti de dispositif présente une base (4) en forme de cadre reliant deux jupes (5) dans la zone inférieure en tant que traverse pour la prise d'appui sur un bâti de base (3), en ce qu'en particulier la hase (4) forme un chariot avec un dispositif de roulement se trouvant transversalement au sens de défilement (12) de la bande support (10) et en ce que de préférence la connexion d'entraînement entre le dispositif de transfert (14) et l'engrenage de superposition (54) est formée par une commande par courroie (56).
